# FASCICULE DE BREVET EUROPEEN

(11) **EP 3 986 788 B1**
(45) Date de publication et mention de la délivrance du brevet: **28.06.2023**
(21) Numéro de dépôt: 20742348.4
(22) Date de dépôt: 16.06.2020
(51) Int. Cl.: B64D 13/06

(54) **SYSTÈME DE CONDITIONNEMENT D'AIR ÉLECTRIQUE D'UNE CABINE D'AÉRONEF COMPRENANT UN MOTOCOMPRESSEUR ET UNE TURBOMACHINE À CYCLE À AIR**
FLUGZEUGKLIMAANLAGE MIT EINEM ELEKTRISCH ANGETRIEBENEN KOMPRESSOR UND EINER TURBOMASCHINE
ELECTRIC AIR CONDITIONING SYSTEM OF AN AIRCRAFT CABIN INCLUDING A MOTORCOMPRESSOR AND AN AIR CYCLE TURBOMACHINE

(30) Priorité: 21.06.2019 FR 1906745
(43) Date de publication de la demande: 27.04.2022
(73) Titulaire: Liebherr-Aerospace Toulouse SAS, 31200 Toulouse (FR)
(72) Inventeur: LAVERGNE, David, 31016 TOULOUSE Cedex 2 (FR); SANCHEZ, Frédéric, 31016 TOULOUSE Cedex 2 (FR)
(74) Mandataire: Bringer IP
(86) Numéro de dépôt international: PCT/FR2020/051034
(87) Numéro de publication internationale: WO 2020/254755

(56) Documents cités:
- EP-A1- 2 998 224
- US-A1- 2007 113 579
- US-A1- 2018 057 175
- US-A1- 2019 135 440

## Description

### Domaine technique de l'invention

L'invention concerne un système de conditionnement d'air électrique d'une cabine d'aéronef. En particulier, l'invention concerne un système de conditionnement d'air comprenant un motocompresseur et une turbomachine à cycle à air.

### Arrière-plan technologique

Dans tout le texte, le terme « cabine » désigne tout espace intérieur d'un aéronef dont la pression et/ou la température de l'air doit être contrôlée. Il peut s'agir d'une cabine pour passagers, du cockpit de pilotage, d'une soute, et de manière générale de toute zone de l' aéronef qui nécessite un air à une pression et/ou une température contrôlée. Cet air à une pression et/ou une température contrôlée est fourni par un système de conditionnement d'air.

Dans tout le texte, le terme motocompresseur désigne un compresseur équipé d'un moteur électrique. Le compresseur comprend une entrée d'air, une sortie d'air et une roue à aubes adaptée pour pouvoir être traversée par un fluide compressible tel que l'air, agencée entre l'entrée et la sortie, et entrainée en rotation par ledit moteur électrique, de manière à pouvoir aspirer l'air en entrée de compresseur, en modifier la pression, la température et/ou la vitesse, et le délivrer à la sortie d'air.

Il existe un certain nombre d'aéronefs dans lesquels le contrôle environnemental des cabines est réalisé de façon entièrement pneumatique, c'est-à-dire par des systèmes fonctionnant à partir d'un air prélevé sur les compresseurs des moteurs de propulsion de l'aéronef et/ou d'air extérieur à pression dynamique, plus ou moins importante suivant le type de prélèvement d'air extérieur - écope, entrée pariétale, etc. - et plus connu sous l'acronyme d'air RAM, lorsque l'aéronef est en vol.

EP2998224 A1 divulgue un système de conditionnement d'air électrique d'une cabine d'un aéronef.

Dans tout le texte qui suit, la notion d'air dynamique fait référence à un air prélevé à l'extérieur de l'aéronef par tous types de moyens connus, tel qu'une écope, une entrée pariétale plus connue sous la dénomination anglaise d'entrée « flush/NACA », etc.

Le problème général qui se pose de longue date avec ce type de système de conditionnement d'air est de minimiser le prélèvement d'air sur les compresseurs des moteurs, de façon à minimiser l'impact de ce prélèvement d'air sur la consommation de kérosène et sur les performances des moteurs. Un autre problème consiste à pouvoir assurer le contrôle de la température et de la pression en cabine dans toutes les phases de fonctionnement de l'aéronef, y compris dans les phases de décollage, de descente, et au sol.

Les nouvelles générations d'avion privilégient dorénavant des systèmes de conditionnement d'air électrique de manière à supprimer les besoins de prélèvement d'air sur les compresseurs des moteurs propulsifs.

Ainsi, il a déjà été proposé des systèmes de conditionnement d'air électrique comprenant plusieurs turbomachines motorisées permettant de générer le débit et la pression d'air frais nécessaire à la pressurisation de la cabine.

Compte tenu de la forte différence de masse volumique à l'aspiration des compresseurs entre le fonctionnement au sol et en vol, les systèmes électriques actuellement proposés s'appuient sur au moins deux turbomachines motorisées de forte puissance organisées de sorte qu'une seule turbomachine motorisée puisse être utilisée au sol et que les différentes turbomachines motorisées puissent être utilisées en vol pour assurer le conditionnement d'air de la cabine. Ces systèmes sont en outre équipés d'un cycle vapeur qui permet d'assurer un complément de puissance froide lorsque nécessaire.

Un des inconvénients de ces solutions électriques est sa complexité, notamment en raison du grand nombre de turbomachines motorisées nécessaires et de la nécessité de disposer d'un cycle vapeur en complément du cycle à air.

Les inventeurs ont donc cherché à proposer une nouvelle architecture d'un système de conditionnement d'air qui limite le nombre de turbomachines motorisées nécessaires et ne nécessite plus le recours à un cycle vapeur.

### Objectifs de l'invention

L'invention vise à fournir un système de conditionnement d'air électrique d'une cabine d'un aéronef.

L'invention vise en particulier à fournir un tel système de conditionnement d'air qui ne nécessite pas la présence d'un cycle vapeur.

L'invention vise aussi à fournir un système de conditionnement d'air qui ne comprend qu'une seule machine électrique motorisée.

L'invention vise aussi à fournir un tel système de conditionnement d'air qui bénéficie d'une intégration optimisée et compacte, avec un gain en masse et/ou en encombrement.

L'invention vise également à fournir un tel système de conditionnement d'air fiable qui permet de limiter la plage de débit réduit entre les conditions de l'aéronef au sol ou en vol.

L'invention vise également à adapter le comportement du système de conditionnement d'air en fonction des conditions de vol de l'aéronef, et en particulier en fonction de son altitude.

L'invention vise enfin à fournir un procédé de conditionnement d'air électrique d'une cabine d'un aéronef.

### Exposé de l'invention

Pour ce faire, l'invention concerne un système de conditionnement d'air électrique d'une cabine d'un aéronef comprenant une source d'air frais, un canal de circulation d'un air dynamique prélevé à l'extérieur de l'aéronef, un réseau de conduites et de vannes de régulation configurées pour pouvoir réguler le débit d'air circulant à travers lesdites conduites en fonction des conditions de vol de l'aéronef, un échangeur de chaleur, dit échangeur primaire de refroidissement logé dans ledit canal de circulation d'air dynamique, un échangeur de chaleur, dit échangeur principal de refroidissement, logé dans ledit canal de circulation d'air dynamique.

Un système de conditionnement d'air électrique selon l'invention comprend :
- un injecteur d'air débouchant dans ledit canal d'air dynamique en amont desdits échangeurs de refroidissement,
- un port d'évacuation d'air vicié de ladite cabine,
- un motocompresseur à entrainement électrique comprenant une entrée d'air reliée fluidiquement à ladite source d'air frais par ledit réseau de conduites, et une sortie d'air reliée audit échangeur primaire de refroidissement (aussi désigné dans tout le texte par l'acronyme PHx), logé dans ledit canal de circulation d'air dynamique,
- une turbomachine à cycle à air comprenant au moins un premier compresseur et une première turbine couplés mécaniquement l'un à l'autre par un arbre mécanique,
   ∘ ledit premier compresseur comprenant une entrée d'air adaptée pour pouvoir être reliée fluidiquement par ledit réseau de conduites, sur commande desdites vannes de régulation, soit audit échangeur primaire de refroidissement, soit à ladite source d'air frais, et une sortie d'air reliée fluidiquement audit échangeur principal de refroidissement (aussi désigné dans tout le texte par l'acronyme MHx), logé dans ledit canal de circulation d'air dynamique prélevé à l'extérieur de l'aéronef,
   ∘ ladite première turbine comprenant une entrée d'air adaptée pour pouvoir être reliée fluidiquement par ledit réseau de conduites, sur commande desdites vannes de régulation, soit audit port d'évacuation d'air vicié de ladite cabine, soit audit échangeur principal de refroidissement, et une sortie d'air adaptée pour pouvoir être reliée fluidiquement, par ledit réseau de conduites, sur commande desdites vannes de régulation, soit à ladite cabine pour pouvoir l'alimenter en air à pression et température contrôlées, soit audit injecteur d'air débouchant dans ledit canal de circulation d'air, en amont desdits échangeurs de refroidissement.

Un système de conditionnement d'air selon l'invention (aussi désigné par les termes de pack de conditionnement d'air) comprend donc une seule machine électrique (le motocompresseur à entrainement électrique) et une seule machine pneumatique (la turbomachine à cycle à air).

L'architecture particulière d'un système de conditionnement d'air selon l'invention permet, au sol, de maximiser la puissance froide produite par le cycle à air en augmentant la pression de fonctionnement et l'efficacité du cycle en réalisant une compression bi-étagée (obtenue par la compression successive du motocompresseur et du premier compresseur de la turbomachine), suivie d'un refroidissement intermédiaire (obtenu par l'échangeur principal), et d'une détente (obtenue au moins par la première turbine de la turbomachine à cycle à air). Un système selon l'invention est donc exempt de cycle vapeur.

L'architecture particulière du système de conditionnement d'air selon l'invention permet en outre, en vol, une génération du débit d'air frais complémentaire en récupérant l'énergie de l'air vicié évacué de la cabine pour alimenter au moins une turbine de détente de la turbomachine à cycle à air, qui entraine alors en rotation au moins le premier compresseur de la turbomachine pour qu'il puisse comprimer l'air frais fourni par la source d'air frais. Ce débit d'air frais produit par la turbomachine à cycle à air permet de réduire le débit du motocompresseur.

L'architecture d'un système de conditionnement d'air selon l'invention permet en outre qu'en vol, le refroidissement de l'air dynamique dans le canal d'air dynamique soit assurée par l'injecteur d'air débouchant en amont des échangeurs de refroidissement et alimenté par l'air issu de la turbine de la turbomachine. Cela permet de limiter la trainée de l'avion par une moindre consommation d'air extérieur.

Le basculement du mode sol vers le mode vol et inversement est obtenu par la commande des vannes de régulation agencées sur le réseau de conduites qui relient les différents organes du système de conditionnement d'air selon l'invention.

Cette commande des vannes est fonction des conditions de vol qui peuvent, par exemple, être représentées par une information concernant le poids en charge sur les roues ou la vitesse de l'aéronef.

Un système de conditionnement d'air selon l'invention permet en outre de gérer de manière optimale tous les points de fonctionnement dans un champ compresseur avec diffuseur variable. En d'autres termes, il est possible de rapprocher le point de fonctionnement du compresseur au sol du point de fonctionnement du compresseur en vol.

L'ensemble de ces avantages permet en outre une intégration optimisée et compacte, notamment un gain de masse et d'encombrement, en réalisant les fonctions de conditionnement d'air avec un nombre d'équipements limité tout en conservant une grande flexibilité.

En outre, l'invention permet d'obtenir un système de conditionnement d'air fiable, flexible, et qui peut s'adapter aux différentes conditions de vol de l'aéronef, et notamment en fonction de son altitude.

Avantageusement et selon l'invention, ladite turbomachine à cycle à air comprend au moins un deuxième compresseur et une deuxième turbine couplés mécaniquement audit premier compresseur et à ladite première turbine par ledit arbre mécanique,
- ledit deuxième compresseur comprenant une entrée d'air reliée fluidiquement à ladite source d'air frais, et une sortie d'air adaptée pour pouvoir être reliée fluidiquement, sur commande desdites vannes de régulation, soit à ladite entrée d'air dudit premier compresseur, soit à une trompe d'air débouchant dans ledit canal d'air dynamique en aval desdits échangeurs de refroidissement,
- ladite deuxième turbine comprenant une entrée d'air adaptée pour pouvoir être reliée fluidiquement, sur commande desdites vannes de régulation, soit audit échangeur principal de refroidissement, soit audit port d'évacuation d'air vicié de ladite cabine, et une sortie d'air adaptée pour pouvoir être reliée fluidiquement, sur commande desdites vannes de régulation, soit à ladite entrée d'air de ladite première turbine, soit audit injecteur débouchant dans ledit canal d'air dynamique en amont desdits échangeurs de refroidissement.

Selon cette variante avantageuse, la turbomachine à cycle à air est une machine quatre roues, avec deux compresseurs et deux turbines montés sur le même arbre mécanique.

Cette variante avantageuse permet notamment au sol d'assurer la circulation d'air dynamique dans le canal de circulation d'air par la trompe d'air débouchant dans le canal de circulation d'air dynamique alimenté par la sortie du deuxième compresseur, alimenté en entrée par l'air frais issu de la source d'air frais.

Cette variante avantageuse permet également, au sol, d'assurer une double détente par les deux turbines alimentées en série avant d'alimenter la cabine.

Cette variante avantageuse permet également, en vol, une compression bi-étage assurée par les deux compresseurs de la turbomachine à cycle à air alimentés en série par la source d'air frais.

Cette variante avantageuse permet également, en vol, d'assurer la rotation des deux compresseurs, par les deux turbines alimentées en parallèle par l'air vicié évacué de la cabine.

Selon cet aspect de l'invention, l'air sortant de la cabine de l'aéronef, désigné par les termes d'air vicié, est récupéré pour alimenter l'entrée des deux turbines du système de conditionnement d'air. Cela permet une récupération d'énergie pour pouvoir entrainer en rotation les compresseurs de la turbomachine.

Selon une autre variante, la circulation d'air dans le canal de circulation d'air dynamique peut être assurée par un ventilateur électrique ou par un ventilateur monté sur l'arbre de la turbomachine à cycle à air.

Avantageusement, un système selon l'invention comprend en outre une boucle d'extraction d'eau adaptée pour pouvoir être reliée fluidiquement par ledit réseau de conduites, sur commande d'une vanne d'altitude, audit échangeur principal de refroidissement et à au moins une turbine de ladite turbomachine à cycle à air, de manière à pouvoir extraire l'eau présente dans l'air délivré par ledit échangeur de refroidissement principal avant d'être délivré à cette turbine de détente.

Le système selon l'invention permet donc, lorsque les conditions de vol l'imposent, en dessous d'une altitude prédéterminée, d'assécher l'air par la boucle d'extraction d'eau, avant d'alimenter les turbines de détente de la turbomachine à cycle à air. Un système selon l'invention permet également, au-delà de cette altitude prédéterminée, de contourner la boucle d'extraction d'eau, lorsque l'air est suffisamment sec et frais pour pouvoir alimenter la cabine de l'aéronef.

Avantageusement et selon l'invention, lesdites vannes de régulation sont pilotées pour permettre au moins les modes de fonctionnement suivants :
- un mode de fonctionnement, dit mode sol, dans lequel ledit motocompresseur est alimenté par la source d'air frais de manière à pouvoir comprimer cet air, qui est ensuite dirigé, après refroidissement par ledit échangeur primaire de refroidissement, vers le premier compresseur de ladite turbomachine à cycle à air pour y subir une deuxième compression, puis vers ladite boucle d'extraction d'eau et lesdites turbines de la turbomachine alimentées en série pour y subir une double détente avant d'alimenter ladite cabine de l'aéronef, et dans lequel ledit deuxième compresseur de ladite turbomachine est en outre alimenté par ladite source d'air frais qui est ensuite dirigé, après compression vers ladite trompe d'air agencée en aval des échangeurs de refroidissement pour assurer la circulation d'air dynamique dans ledit canal d'air dynamique,
- un mode de fonctionnement, dit mode vol, dans lequel ladite source d'air frais alimente en parallèle ledit motocompresseur et lesdits compresseurs de ladite turbomachine alimentés en série, pour pouvoir y subir une double compression avant d'être refroidi respectivement par ledit échangeur primaire de refroidissement et ledit échangeur principal de refroidissement, et d'être réuni en un débit d'air commun dirigé vers ladite cabine en court-circuitant ladite boucle d'extraction, et dans lesdites turbines de la turbomachine à cycle à air sont alimentées en parallèle par un air vicié évacué de la cabine pour pouvoir fournir une puissance mécanique d'entrainement des compresseurs de la turbomachine à cycle à air, lesdites turbines alimentant en sortie ledit injecteur d'air débouchant dans ledit canal de circulation d'air en amont desdits échangeurs de refroidissement.

Un système selon cette variante est donc configuré pour pouvoir présenter au moins un mode vol et au moins un mode sol, chaque mode étant le résultat de la commande des vannes de régulation associés au réseau de conduites reliant les différents organes du système selon l'invention.

Le mode sol permet qu'au sol, et notamment par temps chaud, le motocompresseur comprime l'air extérieur formant la source d'air frais. Cet air est ensuite refroidi par l'échangeur primaire de refroidissement, dit aussi échangeur PHx et dirigé vers l'entrée du premier compresseur de la turbomachine, aussi désignée par turbomachine ACM, pour y être comprimé une deuxième fois (formant ainsi un « boost » en pression selon la terminologie anglaise). Cet air comprimé est ensuite refroidi par l'échangeur principal de refroidissement, dit aussi échangeur MHx, puis dirigé vers la boucle d'extraction d'eau et la deuxième turbine de la turbomachine ACM. L'air asséché est finalement détendu au travers de la première turbine de la turbomachine ACM pour produire le maximum de puissance froide. La ventilation du canal d'air dynamique (qui forme la passe froide des échangeurs PHx et MHx) est assurée par la trompe d'air alimentée par le deuxième compresseur de la turbomachine ACM qui comprime l'air ambiant.

Le mode vol permet qu'à partir d'une altitude prédéterminée, un premier débit d'air frais est comprimé par le motocompresseur, puis refroidi par l'échangeur PHx. Un second débit d'air comprimé est généré par les compresseurs de la turbomachine ACM et refroidi par l'échangeur MHx. Les deux débits d'air sont réunis en sortie de MHx pour être dirigés vers la cabine, en court-circuitant la boucle d'extraction d'eau. Les première et deuxième turbines de la turbomachine ACM sont alimentées par un débit d'air vicié évacué de la cabine, ce qui permet d'entrainer en rotation les premier et deuxième compresseurs de la turbomachine montés sur le même arbre mécanique que les turbines. Le débit d'air froid produit par les deux turbines de la turbomachine ACM est injecté dans le canal de circulation d'air dynamique, en amont des échangeurs MHx et PHx par l'intermédiaire de l'injecteur d'air.

Le débit d'air frais produit par la turbomachine ACM permet de réduire le débit du motocompresseur, ce qui est favorable à l'optimisation du point de fonctionnement aérodynamique dans la mesure où les points sol et vol du champ compresseur se rapprochent.

Le mode sol est par exemple activé lorsque l'aéronef est au sol et à basse altitude (par exemple en dessous de 15000 pieds (=4572 m) d'altitude) de manière à pouvoir générer le maximum de puissance froide par le « boost » en pression obtenu par la mise en série du motocompresseur et du premier compresseur de la turbomachine ACM, et la séparation de l'eau obtenue par la liaison avec la boucle d'extraction d'eau.

Lorsque l'aéronef est à moyenne ou haute altitude (par exemple supérieure à 15000 pieds (=4572 m) par jour chaud ou supérieure à 25000 pieds (=7620 m) par jour froid), la séparation de l'eau n'est plus nécessaire et est rendue inactive par le contournement de la boucle d'extraction d'eau (par exemple par une ouverture d'une vanne de contournement ou vanne de bypass associé à cette boucle d'extraction d'eau). En outre, la turbomachine ACM produit un débit d'air frais, ce qui permet de réduire le débit du motocompresseur.

Avantageusement et selon l'invention, au moins une vanne de régulation est une vanne pilotée par une module de commande en fonction des conditions de vol de l'aéronef.

Selon l'invention, les vannes de régulation qui permettent de basculer du mode sol au mode vol et inversement, en dirigeant les flux d'air en entrée et en sortie des compresseurs et turbines de la turbomachine ACM, peuvent être soit des vannes d'altitude basculant spontanément d'une position ouverte à une position fermée en fonction d'un paramètre représentatif de l'altitude de l'aéronef, soit être pilotées par un module de commande configuré pour agir sur les actionneurs de ces vannes en fonction des conditions de vol.

Avantageusement et selon l'invention, ladite source d'air frais comprend un dispositif de prélèvement d'air dynamique sur une écope de l'aéronef.

L'invention concerne également un aéronef comprenant une cabine et un système de conditionnement d'air de cette cabine, caractérisé en ce que ledit système de conditionnement d'air de la cabine est un système selon l'invention.

Les avantages et effets techniques d'un système de conditionnement d'air selon l'invention s'appliquent mutatis mutandis à un aéronef selon l'invention.

L'invention concerne également un procédé de conditionnement d'air d'une cabine d'un aéronef comprenant une source d'air frais, un canal de circulation d'un air dynamique prélevé à l'extérieur de l'aéronef, un échangeur de refroidissement, dit primaire logé dans ledit canal de circulation d'air dynamique, un échangeur de refroidissement, dit principal, logé dans ledit canal de circulation d'air dynamique, un motocompresseur à entrainement électrique, une turbomachine à cycle à air comprenant au moins un premier compresseur et une première turbine reliés mécaniquement l'un à l'autre, et un réseau de conduites et de vannes de régulation.

Un procédé selon l'invention comprend les étapes suivantes :
- l'air frais est comprimé par ledit motocompresseur,
- l'air comprimé par ledit motocompresseur est véhiculé par ledit réseau de conduites vers ledit échangeur primaire de refroidissement (PHx),
- l'air refroidi par ledit échangeur primaire de refroidissement est véhiculé par ledit réseau de conduites, en fonction des conditions de vol, soit vers ledit premier compresseur de ladite turbomachine à cycle à air pour y subir une deuxième compression, soit vers ladite cabine,
- lorsque les conditions de vol l'imposent, l'air véhiculé vers ledit premier compresseur est ensuite refroidi par ledit échangeur principal de refroidissement avant d'être détendu par au moins ladite première turbine et véhiculé par ledit réseau de conduites vers ladite cabine,
- ladite première turbine de ladite turbomachine à cycle à air est alimentée, en fonction des conditions de vol, soit par un air vicié évacué de ladite cabine, soit par l'air refroidi par ledit échangeur principal de refroidissement pour pouvoir entrainer au moins ledit premier compresseur en rotation,
- ladite première turbine de ladite turbomachine à cycle à air alimente, en fonction des conditions de vol, soit ladite cabine, soit un injecteur d'air qui débouche dans ledit canal de circulation d'air dynamique en amont desdits échangeurs de refroidissement.

Un procédé de conditionnement d'air selon l'invention est avantageusement mis en oeuvre par un système de conditionnement d'air selon l'invention et un système de conditionnement d'air selon l'invention met avantageusement en oeuvre un procédé selon l'invention.

Ainsi, les avantages et effets techniques d'un système de conditionnement d'air selon l'invention s'appliquent mutatis mutandis à un procédé selon l'invention.

L'invention concerne également un système de conditionnement d'air, un procédé de conditionnement d'air, et un aéronef comprenant un tel système de conditionnement d'air.

### Liste des figures

D'autres buts, caractéristiques et avantages de l'invention apparaîtront à la lecture de la description suivante donnée à titre uniquement non limitatif et qui se réfère aux figures annexées dans lesquelles :
[Fig. 1] est une vue schématique d'un système de conditionnement d'air selon un mode de réalisation de l'invention,
[Fig. 2] est une vue schématique du système de conditionnement d'air de la figure 1 en mode sol,
[Fig. 3] est une vue schématique du système de conditionnement d'air de la figure 1 en mode vol.

### Description détaillée d'un mode de réalisation de l'invention

Sur les figures, les échelles et les proportions ne sont pas strictement respectées et ce, à des fins d'illustration et de clarté.

En outre, les éléments identiques, similaires ou analogues sont désignés par les mêmes références dans toutes les figures.

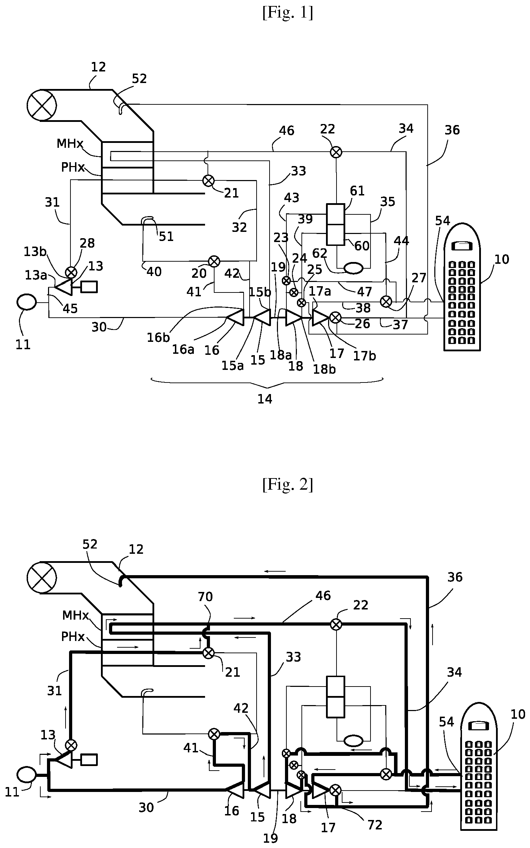

La figure 1 décrit un système de conditionnement d'air électrique d'une cabine 10 d'un aéronef comprenant une source 11 d'air frais, un canal 12 de circulation d'un air dynamique prélevé à l'extérieur de l'aéronef, et un réseau de conduites 30, 31, 32, 33, 34, 35, 36, 37, 38, 39, 40, 41, 42, 43, 44, 45, 46, 47 et vannes de régulation 20, 21, 22, 23, 24, 25, 26, 27, 28 configurées pour pouvoir réguler le débit d'air circulant à travers les conduites en fonction des conditions de vol de l'aéronef.

Un système de conditionnement d'air selon l'invention comprend également un motocompresseur 13 à entrainement électrique comprenant une entrée d'air 13a reliée fluidiquement par la conduite 45 du réseau de conduites à la source 11 d'air frais, et une sortie d'air 13b reliée à un échangeur primaire de refroidissement PHx logé dans le canal 12 de circulation d'air dynamique par la conduite 31 du réseau de conduites équipé de la vanne 28 de régulation.

Le système de conditionnement d'air selon le mode de réalisation des figures comprend également une turbomachine 14 à cycle à air comprenant un premier compresseur 15, un deuxième compresseur 16, une première turbine 17 et une deuxième turbine 18 couplés mécaniquement les uns aux autres par un arbre mécanique 19.

Le premier compresseur 15 comprend une entrée d'air 15a reliée à l'échangeur PHx par l'intermédiaire des conduites 42 et 32 du réseau de conduite équipé de la vanne 21 de régulation. Ainsi, en cas d'ouverture de la vanne 21 de régulation, le compresseur 15 peut être alimenté par l'air en sortie de l'échangeur PHx.

L'entrée 15a du compresseur 15 est également reliée à la sortie 16b du deuxième compresseur 16 par l'intermédiaire des conduites 42 et 41 équipées de la vanne 20 de régulation, qui est une vanne trois voies. La sortie 16b du compresseur 16 est également reliée à une trompe 51 d'air qui débouche dans le canal 12 d'air dynamique par l'intermédiaire des conduites 40, 41 équipées de la vanne 20 trois voies.

La sortie d'air 15b du compresseur 15 est reliée à un échangeur principal de refroidissement MHx, logé dans le canal 12 de circulation d'air dynamique prélevé à l'extérieur de l'aéronef, par l'intermédiaire d'une conduite 33.

La vanne 20 de régulation permet, sur commande, soit de délivrer l'air compressé par le compresseur 16 vers l'entrée du compresseur 15, soit d'alimenter la trompe 51 d'air qui débouche dans le canal 12 de circulation d'air en aval des échangeurs de refroidissement MHx et PHx.

Le compresseur 16 comprend également une entrée 16a reliée à la source d'air frais 11.

En outre, la première turbine 17 comprend une entrée d'air 17a reliée à un port 54 d'évacuation d'air vicié de la cabine 10 par l'intermédiaire de la conduite 38 du réseau de conduites équipée d'une vanne 27 de régulation trois voies.

L'entrée 17a de la turbine 17 peut également être reliée à un condenseur 60 d'une boucle d'extraction d'eau par l'intermédiaire des conduites 38 et 44 équipées d'une vanne 27 trois voies, lui-même relié à la sortie 18b de la turbine 18 par l'intermédiaire de la conduite 39 équipée de la vanne 25.

L'entrée 18a de la turbine 18 est reliée au port d'évacuation 54 d'air vicié de la cabine 10 par l'intermédiaire de la conduite 47 du réseau de conduites équipée de la vanne 23 trois voies.

L'entrée 18a de la turbine 18 est également reliée à un réchauffeur 61 par l'intermédiaire de la conduite 43 du réseau de conduites. Le réchauffeur 61 est relié à un séparateur d'eau 62 par l'intermédiaire de la conduite 35. Le séparateur d'eau 62 est lui-même relié au condenseur et au réchauffeur 61, lui-même relié à l'échangeur MHx par l'intermédiaire de la conduite 46 équipée de la vanne 22.

La turbine 17 comprend également une sortie d'air 17b reliée à la cabine 10 par l'intermédiaire de la conduite 37 équipée de la vanne 26 trois voies pour pouvoir l'alimenter en air à pression et température contrôlées.

La sortie 17b est également reliée à un injecteur d'air 52 débouchant dans le canal 12 de circulation d'air, en amont desdits échangeurs de refroidissement MHx, PHx par l'intermédiaire de la conduite 36 équipée de la vanne 26 trois voies.

Ainsi, l'air issu de l'échangeur MHx peut passer par la boucle d'extraction d'eau formée par le réchauffeur 61, le condenseur 60 et le séparateur d'eau 62 avant d'alimenter l'entrée 18a de la turbine 18 pour une première détente, suivie d'une deuxième détente par la turbine 17 avant d'alimenter la cabine 10.

Un système de conditionnement d'air selon l'invention permet ainsi, par la commande des vannes de régulation 20, 21, 22, 23, 24, 25, 26, 27, 28 associées aux conduites 30, 31, 32, 33, 34, 35, 36, 37, 38, 39, 40, 41, 42, 43, 44, 45, 46, 47, de présenter au moins un mode de fonctionnement sol et un mode de fonctionnement vol.

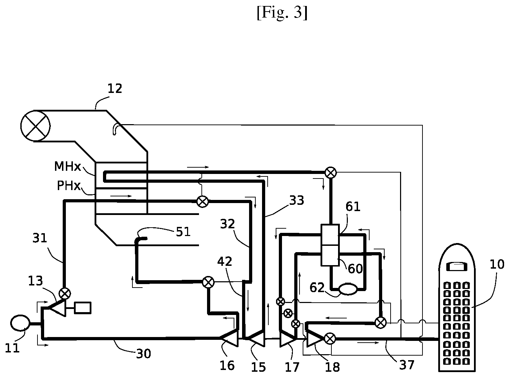

La figure 2 illustre de manière schématique le mode de fonctionnement sol. Les traits gras (sur les Figures 2 et 3) illustrent le cheminement de l'air au sein du système entre la source d'air frais 11 et la cabine 10, permis par la commande des vannes de régulation du système. Les flèches dessinées au voisinage des conduites de circulation représentées en traits gras sur les figures 2 et 3 illustrent le sens de circulation d'air dans les conduites correspondantes.

Dans le mode de fonctionnement de la Figure 2, le motocompresseur 13 est alimenté par la source d'air frais 11. Cet air est comprimé par le motocompresseur 13, puis dirigé par la conduite 31 vers l'échangeur PHx. En sortie de PHx, cet air est dirigé vers le premier compresseur 15 par l'intermédiaire des conduites 32 et 42 pour y subir une deuxième compression. L'air en sortie du compresseur 15 est ensuite dirigé vers l'échangeur MHx par la conduite 33 pour y être refroidi. L'air refroidi par l'échangeur MHx passe ensuite par la boucle d'extraction d'eau formée par le réchauffeur 61, le condenseur 60 et le séparateur d'eau 62.

En sortie de la boucle d'extraction d'eau, l'air est détendu successivement par les turbines 17 et 18, avant d'alimenter la cabine 10 par l'intermédiaire de la conduite 37.

Selon ce mode de réalisation, l'air issu de la source 11 d'air frais alimente également le compresseur 16 par la conduite 30 qui comprime l'air qui est ensuite dirigé vers la trompe 51 d'air qui débouche dans le canal 12 de circulation d'air en aval des échangeurs MHx et PHx pour assurer la circulation d'air dans le canal 12 d'air dynamique.

Pour assurer la circulation d'air dans le canal d'air dynamique, il est possible selon un autre mode de réalisation de remplacer la trompe 51 d'air par un ventilateur électrique ou un ventilateur entrainé par la turbomachine.

Ce mode de fonctionnement est par exemple activé lorsque l'aéronef est au sol et à basse altitude (par exemple en dessous de 15000 pieds d'altitude) de manière à pouvoir générer le maximum de puissance froide par le « boost » en pression obtenu par la mise en série du motocompresseur et du premier compresseur de la turbomachine ACM, et la séparation de l'eau obtenue par la liaison avec la boucle d'extraction d'eau.

La figure 3 illustre de manière schématique le mode de fonctionnement en vol défini comme un vol au-delà d'une altitude prédéterminée, qui est par exemple fixée à 15 000 pieds (=4572 m).

Les traits gras illustrent le cheminement de l'air au sein du système entre la source d'air frais 11 et la cabine 10, permis par la commande des vannes de régulation du système.

En vol, la source 11 d'air frais alimente le motocompresseur 13 qui comprime l'air et le dirige vers l'échangeur primaire PHx par l'intermédiaire de la conduite 31. La source 11 d'air frais alimente également le compresseur 16 par l'intermédiaire de la conduite 30. Ce compresseur 16 comprime l'air et le dirige ensuite vers le compresseur 15, par l'intermédiaire des conduites 41 et 42, pour une deuxième compression. L'air comprimé en sortie du compresseur 15 est dirigé vers l'échangeur principal de refroidissement MHx par l'intermédiaire de la conduite 33.

Les flux d'air issus du motocompresseur 13 et de la double compression par les compresseurs 16 et 15 sont réunis en sortie des échangeurs au noeud référencé 70. Le flux d'air résultant est dirigé directement vers la cabine 10 par les conduites 46 et 34. Pour ce faire, la boucle d'extraction d'eau est court-circuitée par la commande de la vanne 22.

Dans le mode vol, l'air vicié évacué de la cabine par le port 54 alimente directement les turbines 17 et 18 pour récupérer l'énergie de cet air pour assurer l'entrainement des compresseurs 16, 15 montés sur le même arbre 19 que les turbines.

En outre, le flux d'air en sortie de la turbine 17 et le flux d'air en sortie de la turbine 18 sont réunis au noeud référencé 72, puis le débit d'air résultant est adressé audit injecteur 52 d'air par l'intermédiaire de la conduite 36 en amont des échangeurs MHx et PHx.

Le mode vol est activé lorsque l'aéronef est à moyenne ou haute altitude (par exemple supérieure à 15000 pieds (=4572 m) par jour chaud ou supérieure à 25000 pieds (=7620 m) par jour froid). A ces altitudes, la séparation de l'eau n'est plus nécessaire et est rendue inactive par le contournement de la boucle d'extraction d'eau. En outre la turbomachine ACM produit un débit d'air frais, ce qui permet de réduire le débit du motocompresseur.

Un mode de réalisation du système de conditionnement d'air selon l'invention a été décrit avec une turbomachine quatre roues (deux compresseurs et deux turbines). Cela étant, selon d'autres modes de réalisation, la turbomachine peut être une turbomachine trois roues (deux compresseurs et une turbine ou un compresseur et deux turbines) ou une machine deux roues (un compresseur et une turbine).

## Revendications

1. Système de conditionnement d'air électrique d'une cabine (10) d'un aéronef comprenant une source (11) d'air frais, un canal (12) de circulation d'un air dynamique prélevé à l'extérieur de l'aéronef, un réseau de conduites (30, 31, 32, 33, 34, 35, 36, 37, 38, 39, 40, 41, 42, 43, 44, 45, 46, 47) et vannes de régulation (20, 21, 22, 23, 24, 25, 26, 27, 28) configurées pour pouvoir réguler le débit d'air circulant à travers lesdites conduites en fonction des conditions de vol de l'aéronef, un échangeur de chaleur, dit échangeur primaire de refroidissement (PHx) logé dans ledit canal de circulation d'air dynamique, un échangeur de chaleur, dit échangeur principal de refroidissement (MHx) logé dans ledit canal de circulation d'air dynamique, le système comprend en outre :
- un injecteur d'air (52) débouchant dans ledit canal d'air dynamique en amont desdits échangeurs de refroidissement,
- un port d'évacuation (54) d'air vicié de ladite cabine,
- un motocompresseur (13) à entrainement électrique comprenant une entrée d'air (13a) reliée fluidiquement par ledit réseau de conduites à ladite source (11) d'air frais, et une sortie d'air (13b) reliée audit échangeur primaire de refroidissement (PHx), logé dans ledit canal (12) de circulation d'air dynamique,
- une turbomachine (14) à cycle à air comprenant au moins un premier compresseur (15) et une première turbine (17) couplés mécaniquement l'un à l'autre par un arbre (19) mécanique,
- ledit premier compresseur (15) comprenant une entrée d'air (15a) adaptée pour pouvoir être reliée fluidiquement par ledit réseau de conduites, sur commande desdites vannes de régulation, soit audit échangeur primaire de refroidissement (PHx), soit à ladite source (11) d'air frais, et une sortie d'air (15b) reliée fluidiquement audit échangeur principal de refroidissement (MHx), logé dans ledit canal (12) de circulation d'air dynamique prélevé à l'extérieur de l'aéronef,
- ladite première turbine (17) comprenant une entrée d'air (17a) adaptée pour pouvoir être reliée fluidiquement, par ledit réseau de conduite, sur commande desdites vannes de régulation, soit audit port d'évacuation (54) d'air vicié de ladite cabine (10), soit audit échangeur principal de refroidissement (MHx), et une sortie d'air (17b) adaptée pour pouvoir être reliée fluidiquement par ledit réseau de conduites, sur commande desdites vannes de régulation, soit à ladite cabine (10) pour pouvoir l'alimenter en air à pression et température contrôlées, soit audit injecteur (52) d'air débouchant dans ledit canal (12) de circulation d'air, en amont desdits échangeurs de refroidissement (MHx, PHx).

2. Système de conditionnement d'air électrique selon la revendication 1, **caractérisé en ce que** ladite turbomachine (14) à cycle à air comprend au moins un deuxième compresseur (16) et une deuxième turbine (18) couplés mécaniquement audit premier compresseur (15) et à ladite première turbine (17) par ledit arbre mécanique (19),
- ledit deuxième compresseur (16) comprenant une entrée d'air (16a) reliée fluidiquement à ladite source d'air frais (11), et une sortie d'air (16b) adaptée pour pouvoir être reliée fluidiquement, sur commande desdites vannes de régulation, soit à ladite entrée d'air (15a) dudit premier compresseur (15), soit à une trompe (51) d'air débouchant dans ledit canal (12) d'air dynamique en aval desdits échangeurs de refroidissement (PHx, MHx),
- ladite deuxième turbine (18) comprenant une entrée d'air (18a) adaptée pour pouvoir être reliée fluidiquement, sur commande desdites vannes de régulation, soit audit échangeur principal de refroidissement (MHx), soit audit port d'évacuation d'air (54) vicié de ladite cabine (10), et une sortie d'air (18b) adaptée pour pouvoir être reliée fluidiquement, sur commande desdites vannes de régulation, soit à ladite entrée d'air (17a) de ladite première turbine (17), soit audit injecteur (52) d'air débouchant dans ledit canal (12) d'air dynamique en amont desdits échangeurs de refroidissement (MHx, PHx).

3. Système de conditionnement d'air électrique selon l'une des revendications 1 ou 2, **caractérisé en ce qu'**il comprend en outre une boucle d'extraction d'eau adaptée pour pouvoir être reliée fluidiquement par ledit réseau de conduites, sur commande d'une vanne d'altitude, audit échangeur principal de refroidissement (MHx) et à au moins une turbine (17, 18) de ladite turbomachine à cycle à air, de manière à pouvoir extraire l'eau présente dans l'air délivré par ledit échangeur de refroidissement principal avant d'être délivré à cette turbine de détente.

4. Système de conditionnement d'air électrique selon les revendications 2 et 3 prises ensemble, **caractérisé en ce que** lesdits vannes de régulation sont pilotées pour permettre au moins les modes de fonctionnement suivants :
- un mode de fonctionnement, dit mode sol, dans lequel ledit motocompresseur (13) est alimenté par la source (11) d'air frais de manière à pouvoir comprimer cet air, qui est ensuite dirigé, après refroidissement par ledit échangeur primaire de refroidissement (PHx), vers le premier compresseur (15) de ladite turbomachine à cycle à air pour y subir une deuxième compression, puis vers ladite boucle d'extraction d'eau et lesdites turbines (17, 18) de la turbomachine alimentées en série pour y subir une double détente avant d'alimenter ladite cabine (10) de l'aéronef, et dans lequel ledit deuxième compresseur (16) de ladite turbomachine est en outre alimenté par ladite source d'air frais (11) qui est ensuite dirigé, après compression vers ladite trompe d'air (51) agencée en aval des échangeurs de refroidissement pour assurer la circulation d'air dynamique dans ledit canal (12) d'air dynamique,
- un mode de fonctionnement, dit mode vol, dans lequel ladite source (11) d'air frais alimente en parallèle ledit motocompresseur (13) et lesdits compresseurs (15, 16) de ladite turbomachine alimentés en série, pour pouvoir y subir une double compression avant d'être refroidi respectivement par ledit échangeur primaire (PHx) de refroidissement et ledit échangeur principal de refroidissement (MHx), et d'être réuni en un débit d'air commun dirigé vers ladite cabine en court-circuitant ladite boucle d'extraction, et dans lesdites turbines (17, 18) de la turbomachine à cycle à air sont alimentées en parallèle par un air vicié évacué de la cabine (10) pour pouvoir fournir une puissance mécanique d'entrainement des compresseurs de la turbomachine à cycle à air, lesdites turbines (17, 18) alimentant en sortie ledit injecteur (52) d'air débouchant dans ledit canal (12) de circulation d'air en amont desdits échangeurs de refroidissement (PHx, MHx).

5. Système de conditionnement d'air électrique selon la revendication 4, **caractérisé en ce qu'**au moins une vanne de régulation (20, 21, 22, 23, 24, 25, 26, 27, 28) est une vanne pilotée par une module de commande en fonction des conditions de vol de l'aéronef.

6. Système de conditionnement d'air électrique selon l'une des revendications 1 à 5, **caractérisé en ce que** ladite source (11) d'air frais comprend un dispositif de prélèvement d'air dynamique sur une écope de l'aéronef.

7. Aéronef comprenant une cabine (10), **caractérisé en ce qu'**il comprend un système de conditionnement d'air selon l'une des revendications 1 à 6, ledit système de conditionnement d'air alimentant en air conditionné ladite cabine (10) de l'aéronef.

8. Procédé de conditionnement d'air d'une cabine d'un aéronef comprenant une source (11) d'air frais, un canal (12) de circulation d'un air dynamique prélevé à l'extérieur de l'aéronef, un échangeur de refroidissement, dit échangeur primaire (PHx), logé dans ledit canal (12) de circulation d'air dynamique, un échangeur de refroidissement, dit échangeur principal (MHx), logé dans ledit canal (12) de circulation d'air dynamique, un motocompresseur (13) à entrainement électrique, une turbomachine (14) à cycle à air comprenant au moins un premier compresseur (15) et une première turbine (17) reliés mécaniquement l'un à l'autre, et un réseau de conduites (30, 31, 32, 33, 34, 35, 36, 37, 38, 39, 40, 41, 42, 43, 44, 45, 46, 47) et de vannes de régulation (20, 21, 22, 23, 24, 25, 26, 27, 28), le procédé comprend les étapes suivantes :
- l'air frais est comprimé par ledit motocompresseur (13),
- l'air comprimé par ledit motocompresseur (13) est véhiculé par ledit réseau de conduites vers ledit échangeur primaire de refroidissement (PHx),
- l'air refroidi par ledit échangeur primaire de refroidissement (PHx) est véhiculé par ledit réseau de conduites, en fonction des conditions de vol, soit vers ledit premier compresseur (15) de ladite turbomachine à cycle à air pour y subir une deuxième compression, soit vers ladite cabine (10),
- lorsque les conditions de vol l'imposent, l'air véhiculé vers ledit premier compresseur (15) est ensuite refroidi par ledit échangeur principal de refroidissement (MHx) avant d'être détendu par au moins ladite première turbine (17) et véhiculé par ledit réseau de conduites vers ladite cabine (10),
- ladite première turbine (17) de ladite turbomachine à cycle à air est alimentée, en fonction des conditions de vol, soit par un air vicié évacué de ladite cabine (10), soit par l'air refroidi par ledit échangeur principal de refroidissement (MHx) pour pouvoir entrainer au moins ledit premier compresseur (15) en rotation,
- ladite première turbine (17) de ladite turbomachine à cycle à air alimente, en fonction des conditions de vol, soit ladite cabine (10), soit un injecteur (52) d'air qui débouche dans ledit canal de circulation d'air dynamique en amont desdits échangeurs de refroidissement.

## Patentansprüche

1. Elektrisches Klimatisierungssystem für eine Flugzeugkabine (10), welches umfasst, eine Frischluftquelle (11), eine Zirkulationsleitung (12) für dynamische von außerhalb des Flugzeugs genomme Luft, ein Netz von Leitungen (30, 31, 32, 33, 34, 35, 36, 37, 38, 39, 40, 41, 42, 43, 44, 45, 46, 47) und Steuerventilen (20, 21, 22, 23, 24, 25, 26, 27, 28), die so ausgestaltet sind, dass sie den durch die Rohre zirkulierenden Luftstrom in Abhängigkeit von den Flugbedingungen des Flugzeugs regulieren können, einen Wärmetauscher, der als primärer Kühltauscher (PHx) bezeichnet wird und in der dynamischen Luftzirkulationsleitung untergebracht ist, einen Wärmetauscher, der als Hauptkühltauscher (MHx) bezeichnet wird und in der dynamischen Luftzirkulationsleitung untergebracht ist, worin das System weiter umfasst:
- eine Lufteinblasdüse (52), die stromaufwärts der Kühltauscher in der dynamischen Luftzirkulationsleitung mündet,
- eine Öffnung (54) zum Ablassen verbrauchter Luft aus der Kabine,
- einen elektrisch angetriebenen Motorkompressor (13) mit einem Lufteinlass (13a), der über das Rohrnetz mit der Frischluftquelle (11) strömungsmäßig verbunden ist, und einem Luftauslass (13b), der mit dem primären Kühlaustauscher (PHx) verbunden ist, der in der dynamischen Luftzirkulationsleitung (12) untergebracht ist,
- eine Luftkreislauf-Turbomaschine (14), die mindestens einen ersten Kompressor (15) und eine erste Turbine (17) umfasst, die mechanisch über eine mechanische Welle (19) miteinander verbunden sind,
- worin der erste Kompressor (15) einen Lufteinlass (15a) aufweist, der über das Leitungsnetz mittels der Steuerventile entweder mit dem Primärkühltauscher (PHx) oder mit der Frischluftquelle (11) strömungstechnisch verbunden werden kann, und einen Luftauslass (15b), der mit dem Hauptkühltauscher (MHx) strömungstechnisch verbunden ist, der sich in der Zirkulationsleitung (12) für die von außerhalb des Flugzeugs entnommene dynamische Luft befindet,
- worin die erste Turbine (17) einen Lufteinlass (17a) umfasst, der angepasst ist, dass er über das Rohrnetz mittels der Steuerventile entweder mit der Auslassöffnung (54) zum Ablassen verbrauchter Luft aus der Kabine (10) oder mit dem Hauptkühltauscher (MHx) strömungstechnisch verbunden werden kann, und einen Luftauslass (17b), der angepasst ist, dass er über das Leitungsnetz mittels der Steuerventile entweder mit der Kabine (10) strömungstechnisch verbunden werden kann, um sie mit Luft mit kontrolliertem Druck und kontrollierter Temperatur zu versorgen, oder mit der Lufteinblasdüse (52), die in die Luftzirkulationsleitung (12) stromaufwärts der Kühltauscher (MHx, PHx) mündet.

2. Elektrische Klimaanlage nach Anspruch 1, **dadurch gekennzeichnet, dass** die Luftzyklus-Turbomaschine (14) mindestens einen zweiten Kompressor (16) und eine zweite Turbine (18) umfasst, die über die mechanische Welle (19) mechanisch mit dem ersten Kompressor (15) und der ersten Turbine (17) verbunden ist,
- worin der zweite Kompressor (16) einen Lufteinlass (16a), der strömungstechnisch mit der Frischluftquelle (11) verbunden ist, und einen Luftauslass (16b) umfasst, der so beschaffen ist, dass er auf Befehl der Steuerventile strömungstechnisch entweder mit dem Lufteinlass (15a) des ersten Kompressors (15) oder mit einer Luftpumpe (51) verbunden werden kann, die in den dynamischen Luftzirkulationsleitung (12) stromabwärts von den Kühltauschern (PHx, MHx) mündet,
- die zweite Turbine (18) einen Lufteinlass (18a) umfasst, der so ausgelegt ist, dass er mittels der Steuerventile entweder mit dem Hauptkühltauscher (MHx) oder mit der Ablassöffnung (54) für verbrauchte Luft der Kabine (10) fluid verbunden werden kann, und einen Luftauslass (18b), der so angepasst ist, dass er mittels der Steuerventile entweder mit dem Lufteinlass (17a) der ersten Turbine (17) oder mit der Einspritzdüse (52), die in den dynamischen Luftzirkulationsleitung (12) stromaufwärts der Kühltauscher (MHx, PHx) mündet, strömungstechnisch verbunden werden kann.

3. Elektrisches Klimatisierungssystem nach einem der Ansprüche 1 oder 2, **dadurch gekennzeichnet, dass** weiter eine Wasserabsaugschleife vorgesehen ist, die ausgestaltet ist, dass sie über das Rohrnetz mittels eines Höhenventils mit dem Hauptkühltauscher (MHx) und mit mindestens einer Turbine (17, 18) der Luftzyklusturbomaschine strömungstechnisch verbunden werden kann, um das in der vom Hauptkühltauscher gelieferten Luft vorhandene Wasser abzusaugen, bevor es zu dieser Freigabeturbine geleitet wird.

4. Elektrisches Klimatisierungssystem nach den Ansprüchen 2 und 3, **dadurch gekennzeichnet, dass** die Steuerventile so gesteuert werden, dass mindestens die folgenden Betriebsarten möglich sind:
- eine Betriebsart, als Grundbetrieb bezeichnet, in der der motorisierte Kompressor (13) von der Frischluftquelle (11) gespeist wird, um diese Luft zu komprimieren, die dann nach Abkühlung durch den primären Kühltauscher (PHx) zum ersten Kompressor (15) der Luftzyklus-Turbomaschine geleitet wird, um dort eine zweite Kompression zu erfahren, und die dann zur Wasserentnahmeschleife und zu den Turbinen (17, 18) der Turbomaschine geleitet wird, um dort eine doppelte Expansion zu erfahren, bevor die Kabine (10) des Flugzeugs versorgt wird, und in der der zweite Kompressor (16) der Turbomaschine außerdem von der Frischluftquelle (11) gespeist wird, die nach der Verdichtung zur Luftpumpe (51) geleitet wird, die stromabwärts der Kühltauscher angeordnet ist, um eine dynamische Luftzirkulation in der dynamischen Luftzirkulationsleitung (12) zu gewährleisten,
- einen Betriebsmodus, als Flugmodus bezeichnet, bei dem die Frischluftquelle (11) den Motorkompressor (13) und die Kompressoren (15, 16) der Turbomaschine, die in Reihe geschaltet sind, parallel versorgt, so dass sie darin einer doppelten Kompression unterzogen werden können, bevor sie durch den Primärkühltauscher (PHx) bzw. den Hauptkühltauscher (MHx) gekühlt werden, und in einem gemeinsamen Luftstrom vereint werden, der durch Kurzschließen der Absaugschleife in die Kabine geleitet wird, und in den Turbinen (17, 18) der Luftzyklus-Turbomaschine parallel mit der aus der Kabine (10) abgeleiteten verbrauchten Luft gespeist werden, um die mechanische Leistung für den Antrieb der Kompressoren der Luftzyklus-Turbomaschine bereitstellen zu können, wobei die Turbinen (17, 18) die Lufteinspritzdüse (52) am Ausgang speisen, der in die Luftzirkulationsleitung (12) stromaufwärts von den Kühltauschern (PHx, MHx) mündet.

5. Elektrische Klimaanlage nach Anspruch 4, **dadurch gekennzeichnet, dass** mindestens ein Steuerventil (20, 21, 22, 23, 24, 25, 26, 27, 28) ein Ventil ist, das von einem Steuermodul in Abhängigkeit von den Flugbedingungen des Flugzeugs gesteuert wird.

6. Elektrische Klimaanlage nach einem der Ansprüche 1 bis 5, **dadurch gekennzeichnet, dass** die Frischluftquelle (11) eine Vorrichtung zur Entnahme dynamischer Luft aus einer Luaftausnahme des Flugzeugs umfasst.

7. Luftfahrzeug mit einer Kabine (10), **dadurch gekennzeichnet, dass** es eine Klimaanlage nach einem der Ansprüche 1 bis 6 umfasst, wobei die Klimaanlage die Kabine (10) des Luftfahrzeugs mit Luft versorgt.

8. Verfahren zur Klimatisierung einer Flugzeugkabine, umfassend eine Frischluftquelle (11), eine Leitung (12) zur Zirkulation von von außerhalb des Flugzeugs entnommener dynamischer Luft, einen Kühlaustauscher, als Primärkühlaustauscher (PHx) bezeichnet, der in der Leitung (12) für die dynamische Luftzirkulation untergebracht ist, einen Kühlaustauscher, als Hauptkühlaustauscher (MHx) bezeichnet, der in der Leitung (12) für die dynamische Luftzirkulation untergebracht ist, einen elektrisch angetriebenen Motorkompressor (13), eine Luftkreislauf-Turbomaschine (14), welche umfasst, mindestens einen ersten Kompressor (15) und eine erste Turbine (17), die mechanisch miteinander verbunden sind, und ein Netz von Leitungen (30, 31, 32, 33, 34, 35, 36, 37, 38, 39, 40, 41, 42, 43, 44, 45, 46, 47) und Steuerventilen (20, 21, 22, 23, 24, 25, 26, 27, 28), wobei das Verfahren die folgenden Schritte umfasst:
- die Frischluft wird durch den Motorkompressor (13) verdichtet,
- die von dem Motorkompressor (13) komprimierte Luft wird durch das Leitungsnetz zu dem primären Kühltauscher (PHx) befördert,
- die durch den primären Kühlaustauscher (PHx) gekühlte Luft wird durch das Rohrnetz je nach Flugbedingungen entweder zum ersten Kompressor (15) der Luftzyklus-Turbomaschine geleitet, um dort eine zweite Verdichtung zu erfahren, oder zur Kabine (10),
- wenn die Flugbedingungen es erfordern, wird die zum ersten Kompressor (15) geleitete Luft dann durch den Hauptkühltauscher (MHx) gekühlt, bevor sie durch mindestens die erste Turbine (17) entspannt und durch das Leitungsnetz zur Kabine (10) geleitet wird,
- die erste Turbine (17) der Luftzyklus-Turbomaschine wird je nach Flugbedingungen entweder mit verbrauchter Luft, die aus der Kabine (10) abgelassen wird, oder mit Luft, die durch den Hauptkühltauscher (MHx) gekühlt wird, versorgt, um zumindest den ersten Kompressor (15) in Drehung versetzen zu können,
- die erste Turbine (17) der Luftzyklus-Turbomaschine versorgt je nach Flugbedingungen entweder die Kabine (10) oder eine Lufteinblasdüse (52), die in der dynamischen Luftzirkulationsleitung stromaufwärts von den Kühltauschern mündet.

## Claims

1. Electrical air conditioning system for a cabin (10) of an aircraft comprising a source (11) of fresh air, a circulation duct (12) for dynamic air taken from outside the aircraft, a network of pipes (30, 31, 32, 33, 34, 35, 36, 37, 38, 39, 40, 41, 42, 43, 44, 45, 46, 47) and control valves (20, 21, 22, 23, 24, 25, 26, 27, 28) configured to be able to regulate the flow of air circulating through said pipes according to the flight conditions of the aircraft, a heat exchanger, called the primary cooling exchanger (PHx), housed in said dynamic air circulation duct, a heat exchanger, called the main cooling exchanger (MHx), housed in said dynamic air circulation duct,
the system further comprises:
- an air injector (52) opening into said dynamic air duct upstream of said cooling exchangers,
- a port (54) for discharging stale air from said cabin,
- an electrically driven motorized compressor (13) comprising an air inlet (13a) fluidically connected to said source (11) of fresh air by said network of pipes, and an air outlet (13b) connected to said primary cooling exchanger (PHx), housed in said dynamic air circulation duct (12),
- an air cycle turbomachine (14) comprising at least a first compressor (15) and a first turbine (17) mechanically coupled to one another by a mechanical shaft (19),
- said first compressor (15) comprising an air inlet (15a) adapted to be able to be fluidically connected by said network of pipes, by means of said control valves, either to said primary cooling exchanger (PHx), or to said source (11) of fresh air, and an air outlet (15b) fluidically connected to said main cooling exchanger (MHx), housed in said circulation duct (12) for dynamic air taken from outside the aircraft,
- said first turbine (17) comprising an air inlet (17a) adapted to be able to be fluidically connected by said network of pipes, by means of said control valves, either to said discharge port (54) for discharging stale air from said cabin (10), or to said main cooling exchanger (MHx), and an air outlet (17b) adapted to be able to be fluidically connected, by said network of pipes, by means of said control valves, either to said cabin (10) in order to be able to supply it with air at a controlled pressure and temperature, or to said air injector (52) opening into said air circulation duct (12), upstream of said cooling exchangers (MHx, PHx).

2. Electrical air conditioning system according to claim 1, **characterized in that** said air cycle turbomachine (14) comprises at least a second compressor (16) and a second turbine (18) mechanically coupled to said first compressor (15) and to said first turbine (17) by said mechanical shaft (19),
- said second compressor (16) comprising an air inlet (16a) fluidically connected to said source (11) of fresh air, and an air outlet (16b) adapted to be able to be fluidically connected, on command by said control valves, either to said air inlet (15a) of said first compressor (15), or to an air pump (51) opening into said dynamic air duct (12) downstream of said cooling exchangers (PHx, MHx),
- said second turbine (18) comprising an air inlet (18a) adapted to be able to be fluidically connected, by means of said control valves, either to said main cooling exchanger (MHx), or to said stale air discharge port (54) of said cabin (10), and an air outlet (18b) adapted to be able to be fluidically connected, by means of said control valves, either to said air inlet (17a) of said first turbine (17), or to said injector (52) opening into said dynamic air duct (12) upstream of said cooling exchangers (MHx, PHx).

3. Electrical air conditioning system according to one of claims 1 or 2, **characterized in that** it further comprises a water extraction loop adapted to be able to be fluidically connected by said network of pipes, by means of an altitude valve, to said main cooling exchanger (MHx) and to at least a turbine (17, 18) of said air cycle turbomachine, so as to be able to extract the water present in the air delivered by said main cooling exchanger before being delivered to this release turbine.

4. Electrical air conditioning system according to claims 2 and 3 taken together, **characterized in that** said control valves are controlled to allow at least the following operating modes:
- an operating mode, called ground mode, in which said motorized compressor (13) is supplied by the source (11) of fresh air so as to be able to compress this air, which, after cooling by said primary cooling exchanger (PHx), is then directed to the first compressor (15) of said air cycle turbomachine to undergo a second compression therein, then to said water extraction loop and said turbines (17, 18) of the turbomachine supplied in series to undergo a double expansion therein before supplying said cabin (10) of the aircraft, and in which said second compressor (16) of said turbomachine is further supplied by said source (11) of fresh air, which, after compression, is then directed to said air pump (51) arranged downstream of the cooling exchangers to ensure dynamic air circulation in said dynamic air duct (12),
- an operating mode, called flight mode, in which said source (11) of fresh air supplies, in parallel, said motorized compressor (13) and said compressors (15, 16) of said turbomachine supplied in series, so as to be able to undergo a double compression therein before being cooled respectively by said primary cooling exchanger (PHx) and said main cooling exchanger (MHx), and to be combined in a common air flow directed to said cabin by short-circuiting said extraction loop, and in said turbines (17, 18) of the air cycle turbomachine are supplied in parallel by stale air discharged from the cabin (10) in order to be able to provide mechanical power for driving the compressors of the air cycle turbomachine, said turbines (17, 18) supplying said air injector (52) at the outlet that opens into said air circulation duct (12) upstream of said cooling exchangers (PHx, MHx).

5. Electrical air conditioning system according to claim 4, **characterized in that** at least one control valve (20, 21, 22, 23, 24, 25, 26, 27, 28) is a valve controlled by a control module as a function of the flight conditions of the aircraft.

6. Electrical air conditioning system according to one of claims 1 to 5, **characterized in that** said source (11) of fresh air comprises a device for taking dynamic air from a scoop on the aircraft.

7. Aircraft comprising a cabin (10), **characterized in that** it comprises an air conditioning system according to one of claims 1 to 6, said air conditioning system supplying said cabin (10) of the aircraft with air conditioning.

8. Method for air conditioning a cabin of an aircraft comprising a source (11) of fresh air, a duct (12) for circulating dynamic air taken from outside the aircraft, a cooling exchanger, called a primary cooling exchanger (PHx), housed in said dynamic air circulation duct (12), a cooling exchanger, called a main cooling exchanger (MHx), housed in said dynamic air circulation duct (12), an electrically driven motorized compressor (13), an air cycle turbomachine (14) comprising at least a first compressor (15) and a first turbine (17) mechanically connected to one another, and a network of pipes (30, 31, 32, 33, 34, 35, 36, 37, 38, 39, 40, 41, 42, 43, 44, 45, 46, 47) and control valves (20, 21, 22, 23, 24, 25, 26, 27, 28), the method comprises the following steps:
- the fresh air is compressed by said motorized compressor (13),
- the air compressed by said motorized compressor (13) is conveyed by said network of pipes to said primary cooling exchanger (PHx),
- the air cooled by said primary cooling exchanger (PHx) is conveyed by said network of pipes, depending on the flight conditions, either to said first compressor (15) of said air cycle turbomachine to undergo a second compression there, or to said cabin (10),
- when the flight conditions so require, the air conveyed to said first compressor (15) is then cooled by said main cooling exchanger (MHx) before being expanded by at least said first turbine (17) and conveyed by said network of pipes to said cabin (10),
- said first turbine (17) of said air cycle turbomachine is supplied, depending on flight conditions, either by stale air discharged from said cabin (10), or by air cooled by said main cooling exchanger (MHx) in order to be able to put at least said first compressor (15) in rotation,
- said first turbine (17) of said air cycle turbomachine supplies, depending on the flight conditions, either said cabin (10) or an air injector (52) that opens into said dynamic air circulation duct upstream of said cooling exchangers.
